# EUROPEAN PATENT APPLICATION

(11) **EP 4 819 279 A1**
(43) Date of publication of application: **07.10.2026**
(21) Application number: 24898017.9
(22) Date of filing: 21.11.2024
(51) Int. Cl.: H01M 10/0562, H01M 10/052

(54) **SOLID ELECTROLYTE AND ALL SOLID STATE BATTERY COMPRISING SAME**

(30) Priority: 29.11.2023 KR 20230169570
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR)
(74) Representative: Zacco Sweden AB
(86) International application number: PCT/KR2024/018545
(87) International publication number: WO 2025/116421

(57) **Abstract**

The present invention relates to a sulfide-based solid electrolyte comprising lithium (Li), phosphorus (P), sulfur (S), and a halogen element (D), and having an argyrodite-based crystal structure, wherein at least a portion of the crystal structure is doped with at least one element selected from boron (B) and aluminum (Al), and wherein the sulfide-based solid electrolyte has moisture stability of 75% or more.

## Description

### [TECHNICAL FIELD]

The present invention relates to a solid electrolyte and an all-solid-state battery comprising the same.

### [BACKGROUND ART]

As research on safety issues and energy density of high-capacity batteries has attracted attention, all-solid-state batteries have been spotlighted as next-generation batteries.

The all-solid-state battery is a battery in which a liquid electrolyte that may cause explosion is replaced with a solid electrolyte. Since a flammable solvent is not used in the battery, ignition or explosion caused by a reaction such as decomposition of a conventional electrolyte solution does not occur at all, and thus safety of the battery is secured.

In addition, since lithium metal or a lithium alloy can be used as a negative electrode material, energy density with respect to the mass and volume of the battery can be improved.

As the solid electrolyte used in the all-solid-state battery, an inorganic solid electrolyte is generally used, and various studies are being conducted on a sulfide-based solid electrolyte having a composition such as Li₆PS₅Cl, which has an argyrodite structure, among all-solid-state batteries.

Although an argyrodite-based sulfide solid electrolyte has high lithium ion conductivity, there is a problem in that moisture stability is poor, for example, S among constituent elements sensitively reacts with moisture in the air, thereby causing a rapid decrease in ionic conductivity.

### [DETAILED DESCRIPTION OF THE INVENTION]

### [Technical Problem]

Accordingly, an object of the present invention is to provide a sulfide-based solid electrolyte having an argyrodite-based crystal structure, which has improved moisture stability, and an all-solid-state battery comprising the same.

### [Technical Solution]

An embodiment of the present invention provides a sulfide-based solid electrolyte comprising lithium (Li), phosphorus (P), sulfur (S), and a halogen element (D), having an argyrodite-based crystal structure, wherein at least a portion of the crystal structure is doped with at least one element selected from boron (B) and aluminum (Al), and wherein the sulfide-based solid electrolyte has moisture stability of 75% or more.

The solid electrolyte may further have at least a portion of the crystal structure doped with oxygen (O).

The solid electrolyte may have a molar ratio of aluminum (Al) to phosphorus (P) ([Al]/[P]) of 0.01 to 0.3.

The solid electrolyte may have a molar ratio of boron (B) to phosphorus (P) ([B]/[P]) of 0.01 to 0.2.

The solid electrolyte may have a molar ratio of oxygen (O) to phosphorus (P) ([O]/[P]) of 0.05 to 0.6.

The solid electrolyte may have a molar ratio of sulfur (S) to phosphorus (P) ([S]/[P]) of 4 to 5.

The solid electrolyte may have a molar ratio of the halogen element (D) to phosphorus (P) ([D]/[P]) of 1 to 2.

The solid electrolyte may have a molar ratio of lithium (Li) to phosphorus (P) ([Li]/[P]) of 5 to 6.

The halogen element (D) may be any two or more selected from Cl, Br, and I.

The solid electrolyte may be represented by the following Chemical Formula 1.

[Chemical Formula 1] Li_{7-x-7a+ax-7b+bx}P_{1-a-b}Al₂ₐB_{2b}S_{6-6a-6b-x+ax+bx}O_{3a+3b}D_{x-ax-bx}

In Chemical Formula 1, 1≤x≤2, 0≤a≤0.15, 0≤b≤0.09, and D is a halogen element and is F, Cl, Br, I, or a combination thereof.

In Chemical Formula 1, 0.005≤a≤0.06 may be satisfied.

In Chemical Formula 1, 0.005≤b≤0.055 may be satisfied.

Another embodiment of the present invention provides an all-solid-state battery comprising: a positive electrode layer; a negative electrode layer; and a solid electrolyte layer positioned between the positive electrode layer and the negative electrode layer, wherein at least one of the positive electrode layer, the negative electrode layer, and the solid electrolyte layer comprises the above-described solid electrolyte.

### [Advantageous Effects]

The sulfide-based solid electrolyte according to an embodiment of the present invention has an argyrodite-based crystal structure and thus has excellent ionic conductivity, and at least a portion of the crystal structure is doped with at least one element selected from boron (B) and aluminum (Al), thereby improving moisture stability.

In addition, in the sulfide-based solid electrolyte according to an embodiment of the present invention, at least a portion of the crystal structure is doped with at least one element selected from boron (B) and aluminum (Al), thereby improving capacity characteristics of a battery.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the elements described in the Markush-type expression, and means including one or more selected from the group consisting of the elements.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Solid Electrolyte

The sulfide-based solid electrolyte according to an embodiment of the present invention has an argyrodite-based crystal structure comprising lithium (Li), phosphorus (P), sulfur (S), and a halogen element (D). Accordingly, ionic conductivity may be excellently realized.

However, although an argyrodite-based sulfide solid electrolyte has high lithium ion conductivity, there is a problem in that moisture stability is poor, for example, S among constituent elements sensitively reacts with moisture in the air, thereby causing a rapid decrease in ionic conductivity.

Accordingly, in the sulfide-based solid electrolyte according to an embodiment of the present invention, at least a portion of the argyrodite-based crystal structure is doped with at least one element selected from boron (B) and aluminum (Al). Accordingly, not only moisture stability may be improved, but also electrochemical characteristics such as capacity characteristics of a battery may be improved.

In the present specification, the term "doping" may mean not only replacing some elements of a compound with new elements, but also allowing the doped element to become a constituent element of a crystalline phase of the compound.

From the viewpoint of more preferably realizing the above-described effects of improving moisture stability of the solid electrolyte and battery electrochemical characteristics, it may be more appropriate that at least a portion of the argyrodite-based crystal structure is simultaneously doped with boron (B) and aluminum (Al).

In addition, the solid electrolyte may further have at least a portion of the argyrodite-based crystal structure doped with oxygen (O). As at least a portion of the argyrodite-based crystal structure is further doped with oxygen (O) in addition to boron (B) and/or aluminum (Al), the above-described effects of improving moisture stability of the solid electrolyte and battery electrochemical characteristics may be more preferably realized. Meanwhile, oxygen (O) doping may be realized by using boron oxide and aluminum oxide as a boron raw material and an aluminum raw material, as described in the preparation method described below.

In this case, the boron (B) and aluminum (Al) may be doped independently of each other. In other words, the doping amounts of boron and aluminum do not have a fixed correlation with each other, and may be randomly adjusted independently of each other. Accordingly, by adjusting the doping amounts of boron and aluminum independently to optimized ranges, the above-described effects of improving moisture stability of the solid electrolyte and battery electrochemical characteristics may be maximized.

The solid electrolyte may have a molar ratio of aluminum (Al) to phosphorus (P) ([Al]/[P]) of 0.01 to 0.3, and more specifically 0.01 to 0.15. When the molar ratio of aluminum (Al) to phosphorus (P) ([Al]/[P]) is too small, the aluminum doping effect becomes insignificant, and thus the above-described effects of improving moisture stability of the solid electrolyte and battery electrochemical characteristics may be insignificant. When the molar ratio of aluminum (Al) to phosphorus (P) ([Al]/[P]) is too large, the basic argyrodite-based crystal structure may be significantly deformed, and thus ionic conductivity may be deteriorated, and moisture stability of the solid electrolyte and battery electrochemical characteristics may rather be deteriorated.

The solid electrolyte may have a molar ratio of boron (B) to phosphorus (P) ([B]/[P]) of 0.01 to 0.2, and more specifically 0.01 to 0.12. When the molar ratio of boron (B) to phosphorus (P) ([B]/[P]) is too small, the boron doping effect becomes insignificant, and thus the above-described effects of improving moisture stability of the solid electrolyte and battery electrochemical characteristics may be insignificant. When the molar ratio of boron (B) to phosphorus (P) ([B]/[P]) is too large, the basic argyrodite-based crystal structure may be significantly deformed, and thus ionic conductivity may be deteriorated, and moisture stability of the solid electrolyte and battery electrochemical characteristics may rather be deteriorated.

The solid electrolyte may have a molar ratio of oxygen (O) to phosphorus (P) ([O]/[P]) of 0.05 to 0.6. When the molar ratio of oxygen (O) to phosphorus (P) ([O]/[P]) is too small, the additional oxygen doping effect becomes insignificant, and thus the above-described effects of improving moisture stability of the solid electrolyte and battery electrochemical characteristics may be insignificant. When the molar ratio of oxygen (O) to phosphorus (P) ([O]/[P]) is too large, the basic argyrodite-based crystal structure may be significantly deformed, and thus ionic conductivity may be deteriorated, and moisture stability of the solid electrolyte and battery electrochemical characteristics may rather be deteriorated.

The solid electrolyte may have a molar ratio of sulfur (S) to phosphorus (P) ([S]/[P]) of 4 to 5. When the molar ratio of sulfur (S) to phosphorus (P) ([S]/[P]) satisfies the above range, the argyrodite-based crystal structure is maintained intact, and thus ionic conductivity of the solid electrolyte or electrochemical characteristics of a battery may be more preferably realized.

The solid electrolyte may have a molar ratio of the halogen element (D) to phosphorus (P) ([D]/[P]) of 1 to 2. When the molar ratio of the halogen element (D) to phosphorus (P) ([D]/[P]) satisfies the above range, the argyrodite-based crystal structure is maintained intact, and thus ionic conductivity of the solid electrolyte or electrochemical characteristics of a battery may be more preferably realized.

The solid electrolyte may have a molar ratio of lithium (Li) to phosphorus (P) ([Li]/[P]) of 5 to 6. When the molar ratio of lithium (Li) to phosphorus (P) ([Li]/[P]) satisfies the above range, the argyrodite-based crystal structure is maintained intact, and thus ionic conductivity of the solid electrolyte or electrochemical characteristics of a battery may be more preferably realized.

In addition, the halogen element (D) is not particularly limited as long as it is a halogen element, and may be, for example, F, Cl, Br, I, or a combination thereof.

However, from the viewpoint of stabilizing the structure of the solid electrolyte, ease of synthesis, and reduction in process costs, the halogen element (D) may be Cl.

In addition, from the viewpoint of more preferably realizing ionic conductivity, the halogen element (D) may further include one or more elements selected from Br and I in addition to Cl, and more specifically, the halogen element (D) may include Cl and Br.

More specifically, the solid electrolyte may be represented by the following Chemical Formula 1.

[Chemical Formula 1] Li_{7-x-7a+ax-7b+bx}P_{1-a-b}Al₂ₐB_{2b}S_{6-6a-6b-x+ax+bx}O_{3a+3b}D_{x-ax-bx}

In Chemical Formula 1, 1≤x≤2, 0≤a≤0.15, 0≤b≤0.09, and D is a halogen element and is F, Cl, Br, I, or a combination thereof.

In Chemical Formula 1, x satisfies 1≤x≤2. When x is too small, ionic conductivity of the solid electrolyte may be deteriorated. When x is too large, ionic conductivity of the solid electrolyte may be improved, but moisture stability and electrochemical characteristics such as capacity characteristics of a battery may be deteriorated.

In Chemical Formula 1, a may more specifically satisfy 0≤a≤0.15 or 0.005≤a≤0.06. Since a is proportional to the doping amount of aluminum (Al), when a is too small, the aluminum doping effect becomes insignificant, and thus the above-described effects of improving moisture stability of the solid electrolyte and battery electrochemical characteristics may be insignificant. When a is too large, the basic argyrodite-based crystal structure may be significantly deformed, and thus ionic conductivity may be deteriorated, and moisture stability of the solid electrolyte and battery electrochemical characteristics may rather be deteriorated.

In Chemical Formula 1, b may more specifically satisfy 0≤b≤0.09 or 0.005≤b≤0.055. Since b is proportional to the doping amount of boron (B), when b is too small, the boron doping effect becomes insignificant, and thus the above-described effects of improving moisture stability of the solid electrolyte and battery electrochemical characteristics may be insignificant. When b is too large, the basic argyrodite-based crystal structure may be significantly deformed, and thus ionic conductivity may be deteriorated, and moisture stability of the solid electrolyte and battery electrochemical characteristics may rather be deteriorated.

As described above, the sulfide-based solid electrolyte according to an embodiment of the present invention is doped with at least one element selected from boron (B) and aluminum (Al), and as the doping amount thereof is appropriately controlled, the sulfide-based solid electrolyte may have an ionic conductivity of 1.7 mS/cm or more at 25°C, and more specifically 1.9 mS/cm or 2.0 mS/cm or more.

In addition, the sulfide-based solid electrolyte according to an embodiment of the present invention is doped with at least one element selected from boron (B) and aluminum (Al), and as the doping amount thereof is appropriately controlled, the sulfide-based solid electrolyte may have moisture stability of 75% or more, and more specifically 80% or more. In the present specification, the moisture stability of the solid electrolyte may be obtained by calculating a percentage value of ionic conductivity of the solid electrolyte after exposure to air relative to ionic conductivity of the solid electrolyte before exposure to air. The ionic conductivity of the solid electrolyte before exposure to air is ionic conductivity measured at 25°C immediately after synthesis of the solid electrolyte. The ionic conductivity of the solid electrolyte after exposure to air is ionic conductivity measured at 25°C after 0.5 g of the powder-type solid electrolyte is applied to a watch glass in a dry room having a dew point of about -45°C, left for about 8 hours, and then recovered.

### 2. Method for Preparing Solid Electrolyte

Another embodiment of the present invention provides a method for preparing a sulfide-based solid electrolyte, the method comprising: mixing a lithium raw material, a phosphorus raw material, a halogen element raw material, and a doping raw material to form a mixture; and heat-treating the mixture to form a sulfide-based solid electrolyte having an argyrodite-based crystal structure, wherein the doping raw material comprises a boron (B) raw material and an aluminum (Al) raw material.

Hereinafter, the method for preparing a sulfide-based solid electrolyte according to another embodiment of the present invention will be described step by step.

First, a lithium raw material, a phosphorus raw material, a halogen element raw material, and a doping raw material are mixed to form a mixture. In this case, the doping raw material comprises a boron (B) raw material and an aluminum (Al) raw material.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. More specifically, the halogen element raw material may be LiCl.

The boron (B) raw material is not particularly limited as long as it is a boron-containing compound. However, for oxygen doping, the boron (B) raw material may be a boron oxide, for example, B₂O₃.

The aluminum (Al) raw material is not particularly limited as long as it is an aluminum-containing compound. However, for oxygen doping, the aluminum (Al) raw material may be an aluminum oxide, for example, Al₂O₃.

The input amounts of the lithium raw material, the phosphorus raw material, the halogen element raw material, and the doping raw material may be stoichiometrically and appropriately adjusted and introduced according to a target composition of the sulfide-based solid electrolyte.

The mixing may be performed by mechanical mixing or chemical mixing.

The mechanical mixing may be performed, for example, by a method such as a planetary mill, a paint shaker, a ball mill, a bead mill, a homogenizer, a hammer mill, a turbo mill, a disk mill, a planetary mill, or mechanofusion.

The chemical mixing may be performed, for example, by a melt-quenching method. The mixing may be performed for 4 hours to 12 hours, specifically 6 hours to 10 hours, and more specifically 7 hours to 9 hours. When the mixing time is too short, a problem in which mixing is insufficient may occur. When the mixing time is too long, all mixing is completed after a certain time, and even when mixing is further performed, the mixed state becomes the same, thereby causing a problem in terms of process efficiency.

The mixing may be performed at a rotational speed of 100 rpm to 500 rpm, specifically 150 rpm to 450 rpm, and more specifically 200 rpm to 400 rpm. When the rotational speed is too slow, balls may not enter the inside of the powder, so that powder particles may not be entirely mixed sufficiently, or the energy may be low, so that pulverization of the powder particles may be insufficient. In contrast, when the rotational speed is too fast, powder particles may be biased to one place, and a problem in which uniform mixing is insufficient may occur.

Next, optionally as necessary, after the step of forming the mixture, the method may further include compressing the mixture to form a pellet.

In this case, the compression may be performed at a pressure of 100 MPa to 500 MPa, specifically 150 MPa to 450 MPa, and more specifically 200 MPa to 400 MPa. When the pressure is too low, bonding between powder particles may be insufficient, and a problem in which interfacial resistance may increase may occur. In contrast, when the pressure is too high, bonding between powder particles has already been achieved, and the bonding state does not change even when additional pressure is applied, thereby causing a problem in terms of process efficiency. Accordingly, forming the pellet at an appropriate pressure is preferable in terms of productivity.

Next, the mixture is heat-treated to form a sulfide-based solid electrolyte having an argyrodite-based crystal structure.

In this case, the heat treatment may be performed at a temperature of 400°C to 700°C, and more specifically at 500°C to 600°C. When the heat treatment temperature is too low, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment temperature is too high, elements constituting the solid electrolyte may be vaporized, thereby causing loss of the solid electrolyte, or an impurity phase may be generated, thereby reducing ionic conductivity of the solid electrolyte.

In addition, the heat treatment may be performed for 2 hours to 8 hours, and more specifically 3 hours to 5 hours. When the heat treatment time is too short, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment time is too long, elements constituting the solid electrolyte may be vaporized, thereby causing loss of the solid electrolyte, or an impurity phase may be generated, thereby reducing ionic conductivity of the solid electrolyte.

In addition, the heat treatment may be performed under an inert gas atmosphere. As the heat treatment is performed under an inert gas atmosphere, there may be an advantage in that contact with moisture in the air can be blocked. The inert gas atmosphere may be, for example, an Ar, N₂, H₂, or He atmosphere, and more specifically an Ar atmosphere.

### 3. All-Solid-State Battery

Another embodiment of the present invention provides an all-solid-state battery comprising a positive electrode layer, a negative electrode layer, and a solid electrolyte layer positioned between the positive electrode layer and the negative electrode layer, wherein at least one of the positive electrode layer, the negative electrode layer, and the solid electrolyte layer comprises the above-described solid electrolyte.

### (Positive Electrode Layer)

More specifically, the positive electrode layer may include a positive electrode current collector and a positive electrode active material layer disposed on the positive electrode current collector.

The positive electrode active material layer may include, for example, a positive electrode active material and, optionally as necessary, may further include a solid electrolyte. The solid electrolyte included in the positive electrode active material layer may be the same as or different from the solid electrolyte according to an embodiment of the present invention, and may be the same as or different from the solid electrolyte included in the solid electrolyte layer.

The positive electrode active material is a material capable of reversibly absorbing and desorbing lithium ions. The positive electrode active material may be, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate; nickel sulfide; copper sulfide; lithium sulfide; iron oxide; vanadium oxide; or the like, but is not necessarily limited thereto, and any material used as a positive electrode active material in the art may be used. The positive electrode active materials may be used alone, or as a mixture of two or more thereof.

The lithium transition metal oxide is, for example, a compound represented by any one of the following chemical formulas: LiₐA_{1-β}B_{β}D₂, wherein 0.90≤a≤1 and 0≤b≤0.5; LiₐE_{1-β}B_{β}O₂₋*c*D*c*, wherein 0.90≤a≤1, 0≤b≤0.5, and 0≤c≤0.05; LiE_{2-β}B_{β}O₄₋*c*D*c*, wherein 0≤b≤0.5 and 0≤c≤0.05; LiₐNi_{1-β-}*c*Co_{β}B*c*Dα, wherein 0.90≤a≤1, 0≤b≤0.5, 0≤c≤0.05, and 0<α≤2; LiₐNi_{1-β-}*c*Co_{β}B*c*O₂₋αFα, wherein 0.90≤a≤1, 0≤b≤0.5, 0≤c≤0.05, and 0<α<2; LiₐNi_{1-β-}*c*Co_{β}B*c*O₂₋αF₂, wherein 0.90≤a≤1, 0≤b≤0.5, 0≤c≤0.05, and 0<α<2; LiₐNi_{1-β-}*c*Mn_{β}B*c*Dα, wherein 0.90≤a≤1, 0≤b≤0.5, 0≤c≤0.05, and 0<α≤2; LiₐNi_{1-β-}*c*Mn_{β}B*c*O₂₋αFα, wherein 0.90≤a≤1, 0≤b≤0.5, 0≤c≤0.05, and 0<α<2; LiₐNi_{1-β-}*c*Mn_{β}B*c*O₂₋αF₂, wherein 0.90≤a≤1, 0≤b≤0.5, 0≤c≤0.05, and 0<α<2; LiₐNi_{β}E*c*G*d*O₂, wherein 0.90≤a≤1, 0≤b≤0.9, 0≤c≤0.5, and 0.001≤d≤0.1; LiₐNi_{β}Co*c*Mn*d*GₑO₂, wherein 0.90≤a≤1, 0≤b≤0.9, 0≤c≤0.5, 0≤d≤0.5, and 0.001≤e≤0.1; LiₐNiG_{β}O₂, wherein 0.90≤a≤1 and 0.001≤b≤0.1; LiₐCoG_{β}O₂, wherein 0.90≤a≤1 and 0.001≤b≤0.1; LiₐMnG_{β}O₂, wherein 0.90≤a≤1 and 0.001≤b≤0.1; LiₐMn₂G_{β}O₄, wherein 0.90≤a≤1 and 0.001≤b≤0.1; QO₂; QS₂; LiQS₂; V₂O₅; LiV₂O₅; LiIO₂; LiNiVO₄; Li_{(3-f)}J₂(PO₄)₃, wherein 0≤f≤2; Li_{(3-f)}Fe₂(PO₄)₃, wherein 0≤f≤2; and LiFePO₄.

In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound having a coating layer added to a surface of such a compound may also be used, and a mixture of the above-described compound and the compound having the coating layer added thereto may also be used. The coating layer added to the surface of such a compound includes, for example, a coating element compound such as an oxide of a coating element, a hydroxide of a coating element, an oxyhydroxide of a coating element, an oxycarbonate of a coating element, or a hydroxycarbonate of a coating element. The compound forming such a coating layer is amorphous or crystalline. The coating element included in the coating layer may be Mg, Al, Co, K, Na, Ca, Si, Ti, V, Sn, Ge, Ga, B, As, Zr, or a mixture thereof. The method for forming the coating layer is selected within a range that does not adversely affect the physical properties of the positive electrode active material. The coating method may be, for example, spray coating, dipping, or the like. A specific coating method can be well understood by those skilled in the art, and thus a detailed description thereof will be omitted.

The positive electrode active material layer may include, for example, a binder. The binder may be, for example, styrene-butadiene rubber (SBR), polytetrafluoroethylene, polyvinylidene fluoride, polyethylene, or the like, but is not limited thereto, and any binder used in the art may be used.

The positive electrode active material layer may include, for example, a conductive material. The conductive material may be, for example, graphite, carbon black, acetylene black, Ketjen black, carbon fibers, metal powder, or the like, but is not limited thereto, and any conductive material used in the art may be used.

The positive electrode active material layer may further include additives such as a filler, a coating agent, a dispersant, and an ion conductive auxiliary agent, in addition to the above-described positive electrode active material, solid electrolyte, binder, and conductive material.

As the filler, coating agent, dispersant, ion conductive auxiliary agent, and the like that may be included in the positive electrode active material layer, known materials generally used in electrodes of all-solid-state secondary batteries may be used.

As the positive electrode current collector, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The thickness of the positive electrode current collector may be, for example, 1 µm to 100 µm, 1 µm to 50 µm, 5 µm to 25 µm, or 10 µm to 20 µm.

### (Negative Electrode Layer)

More specifically, the negative electrode layer may include a negative electrode current collector and a negative electrode active material layer disposed on the negative electrode current collector.

The negative electrode active material layer may include, for example, a negative electrode active material and a binder, and optionally as necessary, may further include a solid electrolyte.

The negative electrode active material may include, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon may be, for example, carbon black (CB), acetylene black (AB), furnace black (FB), Ketjen black (KB), graphene, or the like, but is not necessarily limited thereto, and any material classified as amorphous carbon in the art may be used. Amorphous carbon is carbon having no crystallinity or very low crystallinity, and is distinguished from crystalline carbon or graphite-based carbon. The crystalline carbon may be, for example, natural graphite, artificial graphite, or a combination thereof.

The metal/metalloid negative electrode active material may include one or more selected from the group consisting of lithium (Li), gold (Au), platinum (Pt), indium (In), palladium (Pd), silicon (Si), silver (Ag), aluminum (Al), bismuth (Bi), tin (Sn), and zinc (Zn), but is not necessarily limited thereto, and any metal negative electrode active material or metalloid negative electrode active material used in the art that forms an alloy or compound with lithium may be used.

The binder included in the negative electrode active material layer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any binder used in the art may be used. The binder may be formed of a single binder or a plurality of different binders.

As the negative electrode active material layer includes the binder, the negative electrode active material layer is stabilized on the negative electrode current collector. In addition, cracking of the negative electrode active material layer is suppressed despite a volume change and/or a relative position change of the negative electrode active material layer during charge and discharge.

The negative electrode active material layer may further include additives used in conventional all-solid-state batteries, for example, a filler, a coating agent, a dispersant, an ion conductive auxiliary agent, and the like.

The all-solid-state battery may further include a second negative electrode active material layer disposed between the negative electrode current collector and the negative electrode active material layer by charging. The second negative electrode active material layer may be precipitated between the negative electrode current collector and the negative electrode active material layer during charging, or may be further disposed on the negative electrode active material layer when assembling an electrode. The second negative electrode active material layer may be a metal layer including lithium or a lithium alloy. The lithium alloy may be, for example, a Li-Al alloy, Li-Sn alloy, Li-In alloy, Li-Ag alloy, Li-Au alloy, Li-Zn alloy, Li-Ge alloy, Li-Si alloy, or the like, but is not limited thereto, and any lithium alloy used in the art may be used. The second negative electrode active material layer may be formed of one of these alloys and/or lithium, or may be formed of several types of alloys and/or lithium.

The negative electrode current collector may be formed of, for example, a material that does not react with lithium, that is, a material that does not form either an alloy or a compound. The negative electrode current collector may include, for example, copper (Cu), stainless steel, titanium (Ti), iron (Fe), cobalt (Co), nickel (Ni), and the like, but is not necessarily limited thereto, and any material used as an electrode current collector in the art may be used. The negative electrode current collector may be formed of one of the above-described metals, or may be formed of an alloy or coating material of two or more metals. The negative electrode current collector may be, for example, in the form of a plate or foil.

When the negative electrode active material layer includes a solid electrolyte, the solid electrolyte included in the negative electrode active material layer may be the same as or different from the solid electrolyte according to an embodiment of the present invention, and may be the same as or different from the solid electrolyte included in the solid electrolyte layer.

### (Solid Electrolyte Layer)

The solid electrolyte layer may be prepared by mixing and drying the above-described solid electrolyte and a binder, or may be prepared by rolling the above-described solid electrolyte powder into a predetermined shape at a pressure of 1 ton to 10 tons.

In this case, the solid electrolyte may be in the form of powder or a molded article. The solid electrolyte in the form of a molded article may be, for example, in the form of a pellet, sheet, thin film, or the like, but is not necessarily limited thereto, and may have various forms depending on the intended use.

The solid electrolyte layer may further include, as necessary, a solid electrolyte such as a conventional sulfide-based solid electrolyte and/or oxide-based solid electrolyte, in addition to the above-described solid electrolyte.

The binder may be, for example, styrene-butadiene rubber (SBR), polytetrafluoroethylene, polyvinylidene fluoride, polyethylene, polyvinyl alcohol, or the like, but is not limited thereto, and any binder used in the art may be used. The binder of the solid electrolyte layer may be the same as or different from the binder of the positive electrode layer and the negative electrode layer.

Another embodiment of the present invention provides an electric vehicle comprising the all-solid-state battery.

Hereinafter, embodiments of the present invention will be described in more detail through Examples. However, the following Examples are merely preferred embodiments of the present invention, and the present invention is not limited to the following Examples.

### Example 1: Preparation of Li₅.₈₂P₀.₉₇B₀.₀₆S₄.₈₅O₀.₀₉Cl₀.₉₇ Solid Electrolyte

### (1) Preparation of Solid Electrolyte

In the final product, Li₇₋ₓ₋₇ₐ+_{ax-7β+βx}P_{1-a-β}Al₂ₐB_{2β}S_{6-6a-6β-x}+_{ax+βx}O_{3a+3β}D_{x-ax-βx} solid electrolyte, Li₂S, P₂S₅, LiCl, and B₂O₃ as reactants were introduced according to the stoichiometric ratio such that x=1, a=0, and b=0.03, and mixed using a planetary mill at 300 rpm for about 8 hours to form a mixture.

Next, a pressure of 300 MPa was applied to the mixture to form a pellet.

Next, the pellet was heat-treated at 550°C for about 4 hours under an argon (Ar) atmosphere to prepare a Li₅.₈₂P₀.₉₇B₀.₀₆S₄.₈₅O₀.₀₉Cl₀.₉₇ solid electrolyte.

### (2) Preparation of All-Solid-State Battery

An all-solid-state battery was prepared using the prepared solid electrolyte as an electrolyte, Li₁Ni₀.₈Co₀.₁Mn₀.₁O₂ as a positive electrode active material, and an In-Li alloy as a negative electrode active material.

### Example 2: Preparation of Li₅.₇₆P₀.₉₆Al₀.₀₂B₀.₀₆S₄.₈O₀.₁₂Cl₀.₉₆

A solid electrolyte and an all-solid-state battery were prepared in the same manner as in Example 1, except that, in the final product, Li₇₋ₓ₋₇ₐ+_{ax-7β+βx}P_{1-a-β}Al₂ₐB_{2β}S_{6-6a-6β-x+ax+βx}O_{3a+3β}D_{x-ax-βx} solid electrolyte, Li₂S, P₂S₅, LiCl, B₂O₃, and Al₂O₃ as reactants were introduced according to the stoichiometric ratio such that x=1, a=0.01, and b=0.03.

### Comparative Example 1: Preparation of Li₆PS₅Cl Solid Electrolyte

Li₂S, P₂S₅, and LiCl as reactants were mixed using a planetary mill at 300 rpm for about 8 hours to form a mixture.

Next, a pressure of 300 MPa was applied to the mixture to form a pellet.

Next, the pellet was heat-treated at 550°C for about 4 hours under an argon (Ar) atmosphere to prepare a Li₆PS₅Cl solid electrolyte.

### Other Examples and Comparative Examples

Solid electrolytes and all-solid-state batteries were prepared in the same manner as in Example 1, except that, in the final product, Li₇₋ₓ₋₇ₐ+_{ax-7β+βx}P_{1-a-β}Al₂ₐB_{2β}S_{6-6a-6β-x+ax+βx}O_{3a+3β}D_{x-ax-βx} solid electrolyte, Li₂S, P₂S₅, LiCl, B₂O₃, and Al₂O₃ as reactants were introduced according to the stoichiometric ratio such that x, a, and b were values shown in Table 1 below.

Table 1 below shows x, a, and b values of Examples and Comparative Examples and compositions of solid electrolytes prepared accordingly.

**[Table 1]**

| | x | a | b | Composition | | | | | | |
|---|---|---|---|---|---|---|---|---|---|---|
| | | | | [Li] | [P] | [Al] | [B] | [S] | [O] | [Cl] |
| Comparative Example 1 | 1 | 0 | 0 | 6 | 1 | 0 | 0 | 5 | 0 | 1 |
| Example 1 | 1 | 0 | 0.03 | 5.82 | 0.97 | 0 | 0.06 | 4.85 | 0.09 | 0.97 |
| Example 2 | 1 | 0.01 | 0.03 | 5.76 | 0.96 | 0.02 | 0.06 | 4.8 | 0.12 | 0.96 |
| Example 3 | 1 | 0.02 | 0.03 | 5.7 | 0.95 | 0.04 | 0.06 | 4.75 | 0.15 | 0.95 |
| Example 4 | 1 | 0.05 | 0.03 | 5.52 | 0.92 | 0.1 | 0.06 | 4.6 | 0.24 | 0.92 |
| Example 5 | 1 | 0.08 | 0.03 | 5.34 | 0.89 | 0.16 | 0.06 | 4.45 | 0.33 | 0.89 |
| Example 6 | 1 | 0.1 | 0.03 | 5.22 | 0.87 | 0.2 | 0.06 | 4.35 | 0.39 | 0.87 |
| Comparative Example 2 | 1 | 0.2 | 0.03 | 4.62 | 0.77 | 0.4 | 0.06 | 3.85 | 0.69 | 0.77 |
| Comparative Example 3 | 1 | 0.5 | 0.03 | 2.82 | 0.47 | 1 | 0.06 | 2.35 | 1.59 | 0.47 |
| Example 7 | 1 | 0.02 | 0 | 5.88 | 0.98 | 0.04 | 0 | 4.9 | 0.06 | 0.98 |
| Example 8 | 1 | 0.02 | 0.01 | 5.82 | 0.97 | 0.04 | 0.02 | 4.85 | 0.09 | 0.97 |
| Example 9 | 1 | 0.02 | 0.02 | 5.76 | 0.96 | 0.04 | 0.04 | 4.8 | 0.12 | 0.96 |
| Example 10 | 1 | 0.02 | 0.04 | 5.64 | 0.94 | 0.04 | 0.08 | 4.7 | 0.18 | 0.94 |
| Example 11 | 1 | 0.02 | 0.05 | 5.58 | 0.93 | 0.04 | 0.1 | 4.65 | 0.21 | 0.93 |
| Example 12 | 1 | 0.02 | 0.06 | 5.52 | 0.92 | 0.04 | 0.12 | 4.6 | 0.24 | 0.92 |
| Example 13 | 1 | 0.02 | 0.08 | 5.4 | 0.9 | 0.04 | 0.16 | 4.5 | 0.3 | 0.9 |
| Comparative Example 4 | 1 | 0.02 | 0.1 | 5.28 | 0.88 | 0.04 | 0.2 | 4.4 | 0.36 | 0.88 |

In Table 1, [Li], [P], [Al], [B], [S], [O], and [Cl] each represent a molar ratio based on 1 mol of the prepared solid electrolyte.

**[Table 2]**

| | A molar ratio | | | | | |
|---|---|---|---|---|---|---|
| | [Al]/[P] | [B]/[P] | [O]/[P] | [S]/[2] | [Cl]/[P] | [Li]/[P] |
| Comparative Example 1 | 0.000 | 0.000 | 0.000 | 5.000 | 1.000 | 6.000 |
| Example 1 | 0.000 | 0.062 | 0.093 | 5.000 | 1.000 | 6.000 |
| Example 2 | 0.021 | 0.063 | 0.125 | 5.000 | 1.000 | 6.000 |
| Example 3 | 0.042 | 0.063 | 0.158 | 5.000 | 1.000 | 6.000 |
| Example 4 | 0.109 | 0.065 | 0.261 | 5.000 | 1.000 | 6.000 |
| Example 5 | 0.180 | 0.067 | 0.371 | 5.000 | 1.000 | 6.000 |
| Example 6 | 0.230 | 0.069 | 0.448 | 5.000 | 1.000 | 6.000 |
| Comparative Example 2 | 0.519 | 0.078 | 0.896 | 5.000 | 1.000 | 6.000 |
| Comparative Example 3 | 2.128 | 0.128 | 3.383 | 5.000 | 1.000 | 6.000 |
| Example 7 | 0.041 | 0.000 | 0.061 | 5.000 | 1.000 | 6.000 |
| Example 8 | 0.041 | 0.021 | 0.093 | 5.000 | 1.000 | 6.000 |
| Example 9 | 0.042 | 0.042 | 0.125 | 5.000 | 1.000 | 6.000 |
| Example 10 | 0.043 | 0.085 | 0.191 | 5.000 | 1.000 | 6.000 |
| Example 11 | 0.043 | 0.108 | 0.226 | 5.000 | 1.000 | 6.000 |
| Example 12 | 0.043 | 0.130 | 0.261 | 5.000 | 1.000 | 6.000 |
| Example 13 | 0.044 | 0.178 | 0.333 | 5.000 | 1.000 | 6.000 |
| Comparative Example 4 | 0.045 | 0.227 | 0.409 | 5.00 | 1.000 | 6.000 |

Table 3 below summarizes evaluation results of ionic conductivity, air stability, and initial discharge capacity characteristics of the all-solid-state batteries according to Experimental Examples 1 and 2 described below.

**[Table 3]**

| | Ionic Conductivity | Moisture Stability | Discharge Capacity |
|---|---|---|---|
| | mS cm⁻¹ | % | mAh g⁻¹ |
| Comparative Example 1 | 2.3 | 73 | 202 |
| Example 1 | 2.25 | 77 | 203 |
| Example 2 | 2.15 | 84 | 205 |
| Example 3 | 2.02 | 83 | 206 |
| Example 4 | 1.9 | 81 | 205 |
| Example 5 | 1.83 | 81 | 203 |
| Example 6 | 1.80 | 80 | 203 |
| Comparative Example 2 | 1.04 | 69 | 191 |
| Comparative Example 3 | 0.39 | 55 | 190 |
| Example 7 | 2.23 | 76 | 203 |
| Example 8 | 2.20 | 80 | 204 |
| Example 9 | 2.21 | 82 | 205 |
| Example 10 | 2.15 | 82 | 203 |
| Example 11 | 2.12 | 81 | 204 |
| Example 12 | 2.10 | 79 | 204 |
| Example 13 | 2.05 | 76 | 203 |
| Comparative Example 4 | 1.93 | 71 | 203 |

### Experimental Example 1: Evaluation of Ionic Conductivity and Moisture Stability of Solid Electrolyte

An experiment for evaluating ionic conductivity and air stability of the solid electrolytes prepared according to Examples and Comparative Examples was performed, and the results are shown in Table 3. Specific experimental methods are as follows.

### (1) Evaluation of Ionic Conductivity Before Exposure to Air (25°C, 0.1C)

The prepared solid electrolyte was pulverized and then prepared in the form of a pellet under a pressure of 300 MPa. Thereafter, a cell was prepared using SUS as a working electrode at a pressure of 70 MPa. Thereafter, impedance was measured by applying a voltage of 10 mV at 25°C.

### (2) Evaluation of Moisture Stability

### 1) Evaluation of Ionic Conductivity After Exposure to Air

In a dry room having a dew point of about -45°C, 0.5 g of the powder-type solid electrolyte was applied to a watch glass and left for about 8 hours. Thereafter, the solid electrolyte was recovered again, and impedance was measured again in the same manner as described above.

### 2) Evaluation of Moisture Stability

Moisture stability was evaluated by converting the value of ionic conductivity after exposure to air relative to ionic conductivity before exposure to air derived above into a percentage (%).

### Experimental Example 2: Evaluation of Electrochemical Characteristics of Lithium Secondary Battery

An experiment for evaluating electrochemical characteristics of the lithium secondary batteries prepared according to Examples and Comparative Examples was performed, and the results are shown in Table 3. Specific experimental methods are as follows.

### (1) Evaluation of Initial Discharge Capacity

At room temperature (25°C), charging was performed at 0.1C to 4.25 V (vs. Li⁺/Li), and charging current application was terminated by setting a current amount of 0.02C at the corresponding voltage. Under the same conditions, discharging was performed at a current amount of 0.1C to 2.50 V (vs. Li⁺/Li), and then charge capacity, discharge capacity, and initial efficiency were evaluated.

Referring to Table 3, in the case of Examples in which boron (B) and/or aluminum (Al) were doped into the argyrodite-based solid electrolyte, and the a and b values or the [B]/[P] and [Al]/[P] values were appropriately controlled, it was confirmed that moisture stability was improved, ionic conductivity was excellently realized, and initial discharge capacity of a battery was improved.

In contrast, in the case of Comparative Example 1, which is a basic argyrodite-based composition electrolyte in which boron (B) and aluminum (Al) were not doped at all into the argyrodite-based solid electrolyte, it was confirmed that ionic conductivity was good, but moisture stability and initial discharge capacity of the battery were low.

In addition, in the case of Comparative Examples 2 and 3, in which the a value or the [Al]/[P] value was too large and the aluminum doping amount was too large, it was confirmed that ionic conductivity was significantly deteriorated, and moisture stability and initial discharge capacity of the battery were rather deteriorated compared to Comparative Example 1 having the basic argyrodite-based composition.

In addition, in the case of Comparative Example 4, in which the b value or the [B]/[P] value was too large and the boron doping amount was too large, it was confirmed that not only ionic conductivity was deteriorated, but moisture stability was rather deteriorated compared to Comparative Example 1 having the basic argyrodite-based composition.

Meanwhile, when the Examples were compared with each other, it was confirmed that, when the a value or [Al]/[P] value and the b value or [B]/[P] value were more appropriately controlled, moisture stability was maximized, and at the same time, ionic conductivity and initial discharge capacity of the battery were preferably realized.

Although preferred embodiments of the present invention have been described above, the present invention is not limited thereto, and various modifications may be made and practiced within the scope of the claims, the detailed description of the invention, and the accompanying drawings, and it is natural that such modifications also fall within the scope of the present invention.

Accordingly, the substantial scope of rights of the present invention shall be defined by the appended claims and equivalents thereof.

## Claims

1. A sulfide-based solid electrolyte, comprising lithium (Li), phosphorus (P), sulfur (S), and a halogen element (D), and having an argyrodite-based crystal structure,
wherein at least a portion of the crystal structure is doped with at least one element selected from boron (B) and aluminum (Al), and
wherein the sulfide-based solid electrolyte has moisture stability of 75% or more.

2. The sulfide-based solid electrolyte of claim 1,
wherein at least a portion of the crystal structure is further doped with oxygen (O).

3. The sulfide-based solid electrolyte of claim 1,
wherein the solid electrolyte has a molar ratio of aluminum (Al) to phosphorus (P) ([Al]/[P]) of 0.01 to 0.3.

4. The sulfide-based solid electrolyte of claim 1,
wherein the solid electrolyte has a molar ratio of boron (B) to phosphorus (P) ([B]/[P]) of 0.01 to 0.2.

5. The sulfide-based solid electrolyte of claim 2,
wherein the solid electrolyte has a molar ratio of oxygen (O) to phosphorus (P) ([O]/[P]) of 0.05 to 0.6.

6. The sulfide-based solid electrolyte of claim 1,
wherein the solid electrolyte has a molar ratio of sulfur (S) to phosphorus (P) ([S]/[P]) of 4 to 5.

7. The sulfide-based solid electrolyte of claim 1,
wherein the solid electrolyte has a molar ratio of the halogen element (D) to phosphorus (P) ([D]/[P]) of 1 to 2.

8. The sulfide-based solid electrolyte of claim 1,
wherein the solid electrolyte has a molar ratio of lithium (Li) to phosphorus (P) ([Li]/[P]) of 5 to 6.

9. The sulfide-based solid electrolyte of claim 1,
wherein the halogen element (D) is any two or more selected from Cl, Br, and I.

10. The sulfide-based solid electrolyte of claim 1,
wherein the solid electrolyte is represented by the following Chemical Formula 1:
[Chemical Formula 1] Li_{7-x-7a+ax-7b+bx}P_{1-a-b}Al₂ₐB_{2b}S_{6-6a-6b-x+ax+bx}O_{3a+3b}D_{x-ax-bx}
wherein, in Chemical Formula 1, 1≤x≤2, 0≤a≤0.15, 0≤b≤0.09, and D is a halogen element and is F, Cl, Br, I, or a combination thereof.

11. The sulfide-based solid electrolyte of claim 10,
wherein 0.005≤a≤0.06.

12. The sulfide-based solid electrolyte of claim 10,
wherein 0.005≤b≤0.055.

13. An all-solid-state battery, comprising:
a positive electrode layer;
a negative electrode layer; and
a solid electrolyte layer positioned between the positive electrode layer and the negative electrode layer,
wherein at least one of the positive electrode layer, the negative electrode layer, and the solid electrolyte layer comprises the solid electrolyte of claim 1.
